# EUROPÄISCHE PATENTSCHRIFT

(11) **EP 3 409 516 B1**
(45) Veröffentlichungstag und Bekanntmachung des Hinweises auf die Patenterteilung: **28.09.2022**
(21) Anmeldenummer: 18175513.3
(22) Anmeldetag: 01.06.2018
(51) Int. Cl.: B60G 17/015, B60G 21/055, F16H 49/00, H02K 5/16, H02K 5/24, H02K 7/116, H02K 7/00

(54) **AKTIVES FAHRWERK**
ACTIVE SUSPENSION
CHÂSSIS ACTIF

(30) Priorität: 02.06.2017 LU 100273
(43) Veröffentlichungstag der Anmeldung: 05.12.2018
(73) Patentinhaber: Ovalo GmbH, 65555 Limburg (DE)
(72) Erfinder:
(74) Vertreter: Hoffmann, Jürgen

(56) Entgegenhaltungen:
- EP-A1- 1 958 804
- WO-A1-03/045719
- WO-A1-2017/042055
- DE-A1-102013 012 755
- DE-A1-102014 225 294
- US-A1- 2010 164 189

## Beschreibung

Die Erfindung betrifft ein aktives Fahrwerk mit einem ersten Aktuator, an dessen Abtrieb ein linker Torsionsstab angekoppelt ist, der dazu ausgebildet ist, mit einer linken Radaufhängung einer Fahrzeugachse verkoppelt zu werden, und mit einem zweiten Aktuator, an dessen Abtrieb ein rechter Torsionsstab angekoppelt ist, der dazu ausgebildet ist, mit einer rechten Radaufhängung einer Fahrzeugachse verkoppelt zu werden, wobei die Abtriebe oder die Torsionsstäbe drehfest mit einem Verbindungstorsionsstab verbunden sind, und/oder wobei die Abtriebe mechanisch parallel geschaltet sind.

Die Erfindung betrifft außerdem ein Fahrzeug mit wenigstens einem solchen aktiven Fahrwerk.

Aktive Stabilisierungssysteme, insbesondere zur Verbesserung des Wankverhaltens bei Kurvenfahrten und/oder zum Vermeiden oder Reduzieren von Nickbewegungen beim Anfahren oder Bremsen, sind in unterschiedlichsten Ausführungsformen bekannt.

Beispielsweise gibt es Systeme, bei denen zwischen den Stabilisatorstangenhälften eines geteilten Stabilisators ein aktiv geregelter Aktuator angeordnet ist, der je nach Fahrsituation die Stabilisatorstangenhälften gegeneinander verdreht, um einer durch die Zentrifugalkraft bewirkten Seitneigung des Fahrzeuges entgegen zu wirken. Hierbei wird das jeweils kurvenäußere Rad einer Achse mit einer zusätzlichen Kraft in Richtung Fahrbahn beaufschlagt, während das kurveninnere Rad mit einer von der Fahrbahn weg gerichteten Kraft beaufschlagt wird.

Aus DE 10 2005 031 036 A1 ist ein Schwenkmotor zur Wankregelung durch gegeneinander Verdrehen von zwei Kraftfahrzeugstabilisatoren bekannt.

Der Schwenkmotor besteht mindestens aus einem Verstellantrieb mit einem Elektromotor, einem Schwenkmotorgetriebe und einem Gehäuse. Der Schwenkmotor ist zwischen den Kraftfahrzeugstabilisatoren, die auch als Hälften eines Gesamtstabilisators angesehen werden können, angeordnet und dazu bestimmt, aufgrund einer geeigneten Ansteuerung, diese Stabilisatorhälften bedarfsgerecht gegeneinander zu verdrehen.

Aus DE 10 2006 040 109 A1 ist ein aktiver, geteilter Kraftfahrzeugstabilisator mit eingebautem Schwenkmotor bekannt. Der Kraftfahrzeugstabilisator dient zur Wankregelung und weist einen Verstellantrieb mit einem Motor, einem Getriebe und mit einem Gehäuse auf. An einem Gehäuseteil ist ein Sensor zur Erfassung des Torsionwinkels des Stabilisatorteils angebracht, dessen Geber am Stabilisatorteil fixiert ist oder umgekehrt.

Aus DE 10 2008 048 950 A1 ist ein druckmittelbetätigbarer Schwenkmotor für ein Fahrzeug bekannt, der in einem geteilten Stabilisator angeordnet ist und mit dem die beiden Stabilisatorhälften zum Ausgleich von Fahrzeugbewegungen zueinander schwenkbar sind. Der Schwenkmotor weist einen in einem Gehäuse axial verschiebbaren Kolben und beidseitig zum Kolben angeordnete Arbeitsräume auf. Durch Druckmittelbeaufschlagung der Arbeitsräume in Verbindung mit einem oder mehreren Koppelelementen ist ein Drehmoment zwischen den Stabilisatorhälften erzeugbar. Zwischen den Arbeitsräumen besteht eine Verbindung, die mittels eines Ventils in Abhängigkeit von dem Fahrzustand des Fahrzeugs schließbar oder freigebbar ist.

Aus DE 10 2009 013 053 A1 ist ein Stabilisator für ein Fahrwerk eines Kraftfahrzeuges mit zumindest zwei Stabilisatorelementen bekannt, welche mittels zumindest eines elektromotorischen Aktuators zur Wankregelung verdrehbar sind und welche jeweils über zumindest eine Koppelstange mit dem Fahrwerk verbunden sind. Der Stabilisator ist mittels zumindest einer hydraulischen Freischalteinrichtung entkoppelbar.

Aus EP 2 011 674 A1 ist eine Stabilisatoranordnung, umfassend einen zweigeteilten Stabilisator, dessen Stabilisatorabschnitte eine rotatorische Relativbewegung zueinander ausführen und bei einer gegensinnigen Verdrehbelastung eine Rückstellkraft ausüben, bekannt. Die Rückstellkraft ist mittels eines Aktuators in Verbindung mit einem Getriebe einstellbar, wobei die Stabilisatoranordnung unabhängig von einer Torsionsfederwirkung der Stabilisatorabschnitte mindestens eine weitere Feder aufweist, die eine Torsionsfederwirkung bewirkt.

Eine ähnliche Vorrichtung ist aus DE 10 2009 006 385 A1 bekannt. Konkret offenbart diese Druckschrift einen Schwenkmotor für einen aktiven Wankstabilisator, der mit seinem Antrieb an eine Stabilisatorhälfte und der statorseitig an eine andere Stabilisatorhälfte eines geteilten Stabilisators angeschlossen werden kann.

Aus DE 10 2008 010 131 A1 ist ein Wankstabilisator für ein Kraftfahrzeug mit einem ersten und einem zweiten Stabilisatorteil, welche jeweils einem Rad einer gemeinsamen Fahrzeugquerachse des Kraftfahrzeugs zuordenbar und/oder zugeordnet sind, bekannt. Der Wankstabilisator weist ein Gehäuse auf, welches für eine kraftfahrzeugfeste Montage ausgebildet ist und in dem die zwei Stabilisatorteile zur Durchführung von gleichsinnigen und gegensinnigen Schwenkbewegungen gelagert sind. Außerdem ist eine Aktuatorvorrichtung vorgesehen, welche einen Elektromotor und ein Übertragungsgetriebe umfasst, wobei der Elektromotor zur Erzeugung eines Drehmoments und das Übertragungsgetriebe zur Weiterführung des Drehmoments an die Stabilisatorteile ausgebildet und/oder angeordnet sind, und wobei der Elektromotor von der Schwenkbewegung der Stabilisatorteile entkoppelt gelagert ist.

Außer dem vorgenannten Typ von Stabilisatorsystemen gibt es auch Systeme mit mehreren Aktuatoren, bei denen jeweils ein Aktuator ausschließlich einer Radaufhängung zugeordnet ist. Bei einem solchen System kann der Höhenstand eines Rades relativ zur Karosserie unabhängig von der Einstellung bei einem anderen Rad, insbesondere unabhängig vom Höhenstand des Rades derselben Fahrzeugachse, eingestellt werden. Ein solches System hat den Vorteil, dass die Räder einer Fahrzeugachse mit gleichgerichteten Kräften und/oder Drehmomenten beaufschlagt werden können, um beispielsweise einer Nickbewegung beim Anfahren und/oder Bremsen entgegenwirken zu können. Ein solches System ist beispielsweise aus DE 10 2010 037 180 A1 und aus DE 10 2010 037 555 A1 bekannt.

WO 2017/042055 A1 offenbart ein Dämpfungssystem eines zweispurigen Fahrzeugs. Das Dämpfungssystem umfasst einen passiven Stabilisator mit einem in Fahrzeug-Querrichtung verlaufenden Drehstab und sich endseitig an diesen anschließenden und mit den einander gegenüberliegenden Radaufhängungen einer Achse des Fahrzeugs verbundenen Hebelelementen und mit zwei jeweils einem Rad der Radaufhängung zugeordneten und am Fahrzeugaufbau gelagerten Aktuatoren mit jeweils einem Antrieb. Die Aktuatoren sind als Elektromotoren ausgebildet und dazu ausgelegt, durch geeignete Regelung ihres Antriebs und somit auch durch aktive Einleitung von Kräften in das System Vertikal-Schwingungen des jeweiligen Rades oder der sog. ungefederten Masse und/oder Schwingungen des Fahrzeugaufbaus in einem Frequenzbereich zwischen 0 Hertz und zumindest 20 Hertz zu bedämpfen.

DE 10 2014 225 294 A1 offenbart ein aktives Fahrwerksystem für ein Kraftfahrzeug, umfassend mindestens eine Verstelleinrichtung mit jeweils einem Aktuator, über welchen je zwei Koppelstangen mithilfe jeweils eines Getriebes relativ zueinander verschwenkbar sind. Bei einer Ausführung bilden Koppelstangen, die mit je einer der Abtriebsseiten der Getriebe verbunden sind, einen gemeinsamen Stabilisatorstab.

WO 03/045719 A1 offenbart ein Stabilisatorsystem für ein Fahrzeug. Das Stabilisatorsystem umfasst eine Torsionskupplung zur Verbindung mit den ungefederten Massen auf gegenüberliegenden Seiten des Fahrzeugs. Die Torsionskupplung umfasst zwei Torsionsstabhälften, die durch eine Antriebsquelle miteinander verbunden sind, um die Torsionsstabhälften zu drehen. Die Antriebsquelle umfasst mindestens zwei Motoren, die jeweils antriebsmäßig mit einer jeweiligen Drehstabhälfte verbunden sind.

EP 1 958 804 A1 offenbart eine Anordnung eines Stabilisators an einer Radaufhängung für Kraftfahrzeuge, mit einem U-förmigen, zweiteilig ausgeführten Stabilisator, dessen Längsarme an Radaufhängungselementen angelenkt sind und dessen quer verlautende Torsionsstäbe getrennt ausgeführt und mittels einer Stellvorrichtung gleichoder gegensinnig zueinander verdrehbar sind. Zur Erzielung einer in den steuerungstechnischen Freiheitsgraden und in der Beeinflussung der Federraten und der Fahreigenschaften des Kraftfahrzeuges verbesserten Anordnung wird vorgeschlagen, dass auf einen jeden Torsionsstab eine separate Stellvorrichtung wirkt und dass die kumulierte Länge der Torsionsstäbe größer als der Abstand der Längsarme des Stabilisators zueinander ist.

Es ist die Aufgabe der vorliegenden Erfindung, ein aktives Fahrwerk anzugeben, das, insbesondere in Radialrichtung, besonders bauraumsparend ausgebildet werden kann und mit dem ein verbesserter Fahrkomfort bei einseitiger Radanregung erzielbar ist.

Die Aufgabe wird durch ein aktives Fahrwerk gelöst, das dadurch gekennzeichnet ist, dass der rechte und der linke Torsionsstab jeweils eine größere Torsionssteifigkeit aufweisen, als der Verbindungstorsionsstab.

Das erfindungsgemäße aktive Fahrwerk hat neben weiteren Vorteilen, auf die weiter unten eingegangen wird, den ganz besonderen Vorteil, dass über den Verbindungstorsionsstab eine Parallelschaltung der Aktuatoren bewirkt ist, so dass insgesamt, für den Fall dass die Aktuatoren ein gleichgerichtetes Drehmoment ausüben, ein hohes Gesamtdrehmoment zu Verfügung steht. Ein solches Gesamtdrehmoment ist bei einem aktiven Fahrwerk, das lediglich einen einzigen Aktuator aufweist, nur unter Verwendung eines Aktuators erzielbar, der radial deutlich mehr Bauraum beansprucht.

Darüber hinaus ist es bei dem erfindungsgemäßen aktiven Fahrwerk vorteilhaft ermöglicht, insbesondere fahrsituationsabhängig, durch entsprechendes Ansteuern der Aktuatoren den linken Torsionsstab und den rechten Torsionsstab gleichzeitig mit unterschiedlichen Drehmomenten zu beaufschlagen, wobei der Verbindungstorsionsstab tordiert wird. Wie weiter unten noch im Detail erörtert ist, können hierbei insbesondere unterschiedlich hohe, gleichgerichtete Drehmomente oder auch unterschiedlich gerichtete Drehmomente auf die Torsionsstäbe ausgeübt werden.

Außerdem erlaubt das erfindungsgemäße aktive Fahrwerk vorteilhaft insbesondere ein gegensinniges Drehen der Torsionsstäbe um besonders große Winkel. Hierdurch ist ein verbesserter Fahrkomfort bei einseitiger Radanregung erzielbar.

Zur Klarstellung wird angemerkt, dass mit dem Begriff der Torsionssteifigkeit im Rahmen dieser Anmeldung, soweit nicht explizit etwas anderes ausgeführt ist, die absolute Torsionssteifigkeit des jeweiligen Bauteils gemeint ist, die insbesondere von dem Material, der Geometrie und der Größe des jeweiligen Bauteils abhängt.

Vorzugsweise kann vorteilhaft vorgesehen sein, dass der linke Torsionsstab und der rechte Torsionsstab identisch und/oder spiegelsymmetrisch aufgebaut sind. An jeden Torsionsstab kann sich endseitig jeweils ein Hebel zur Ankopplung an jeweils einen Lenker einer Radaufhängung anschließen.

Der rechte Torsionsstab, der linke Torsionsstab und der Verbindungstorsionsstab können unabhängig voneinander aus unterschiedlichen Rohmaterialstücken hergestellt sei. Alternativ ist es auch möglich, dass die Torsionsstäbe und der Verbindungstorsionsstab gemeinsam einstückig aus demselben Stück Rohmaterial hergestellt sind.

Der erste Aktuator kann einen ersten Antriebsmotor aufweisen, dem ein erstes Getriebe triebtechnisch nachgeschaltet ist. In gleicher Weise kann der zweite Aktuator aufgebaut sein; nämlich derart, dass er einen zweiten Antriebsmotor aufweist, dem ein zweites Getriebe triebtechnisch nachgeschaltet ist.

Das erste Getriebe kann vorteilhaft als Spannungswellengetriebe ausgebildet sein. Alternativ oder zusätzlich kann vorteilhaft vorgesehen sein, dass das zweite Getriebe als Spannungswellengetriebe ausgebildet ist. Die Verwendung von Spannungswellengetrieben hat, insbesondere aufgrund von deren Spielfreiheit, den besonderen Vorteil, dass eine besonders hohe Einstellgenauigkeit und eine hohe Langlebigkeit erzielbar sind.

Bei einer ganz besonders kompakt und robust ausbildbaren Ausführung bildet jeweils der Flexspline den Abtrieb des jeweiligen Aktuators, während ein Circularspline direkt oder über ein Gehäuse karosseriefest verankert wird. Als Antrieb dient vorzugsweise der Wellengenerator des jeweiligen Spannungswellengetriebes. Insoweit kann vorteilhaft vorgesehen sein, dass ein erster Flexspline des ersten Spannungswellengetriebes den Abtrieb des ersten Aktuators bildet und/oder dass ein zweiter Flexspline des zweiten Spannungswellengetriebes den Abtrieb des zweiten Aktuators bildet.

Bei einer besonders vorteilhaften Ausführung weisen der erste Aktuator und der zweite Aktuator ein gemeinsames Aktuatorgehäuse auf. Alternativ kann auch vorgesehen sein, dass ein erstes Aktuatorgehäuse des ersten Aktuators und ein zweites Aktuatorgehäuse des zweiten Aktuators Bestandteile eines gemeinsamen, zusammengesetzten Aktuatorgehäuses sind. Diese Ausführungen haben den besonderen Vorteil, dass das gemeinsame Aktuatorgehäuse gleichzeitig auch als Traverse der Fahrzeugachse ausgebildet sein kann. Darüber hinaus können in einem solchen Aktuatorgehäuse zusätzliche Bauteile angeordnet sein. Hierzu gehören beispielsweise eine elektronische Steuerungsvorrichtung zum Ansteuern der Aktuatoren oder Sensoren, die aktuelle Messgrößen des aktiven Fahrwerks und/oder der Getriebe und/oder der Antriebsmotore und/oder der Torsionsstäbe und/oder des Verbindungstorsionsstabes messen.

Bei einer anderen Ausführung weist der erste Aktuator ein erstes Aktuatorgehäuse und der zweite Aktuator ein von dem ersten Aktuatorgehäuse räumlich separates zweites Aktuatorgehäuse auf. Auch bei einer solchen Ausführung ist es ermöglicht, dass innerhalb der Gehäuse elektronische Steuerbauteile und/oder Sensoren angeordnet sind.

Wie bereits erwähnt, kann vorteilhaft vorgesehen sein, dass ein erster Circularspline des ersten Spannungswellengetriebes und/oder ein zweiter Circularspline des zweiten Spannungswellengetriebes karosseriefest angeordnet werden. Dies kann vorteilhaft insbesondere dadurch realisiert sein, dass der erste Circularspline und/oder der zweite Circularspline drehfest mit einem Aktuatorgehäuse verbunden sind, wobei das Aktuatorgehäuse dazu ausgebildet und bestimmt ist, an einer Fahrzeugkarosserie befestigt zu werden. Hierfür kann das Aktuatorgehäuse Befestigungselemente aufweisen, wie Befestigungsfahnen, Befestigungsösen oder Befestigungsbohrungen, durch die Befestigungsschrauben geführt werden können.

Ganz allgemein kann vorteilhaft vorgesehen sein, dass das erste Aktuatorgehäuse und/oder das zweite Aktuatorgehäuse und/oder das gemeinsame Aktuatorgehäuse dazu bestimmt und ausgebildet sind, das von dem jeweiligen Aktuator aufgebrachte Drehmoment an einer Fahrzeugkarosserie abzustützen. Insbesondere kann vorteilhaft vorgesehen sein, dass über das Aktuatorgehäuse Drehmomente, Axialkräfte und Radialkräfte abgestützt und in eine Fahrzeugkarosserie abgeleitet werden. Auf diese Weise ist bei einer besonderen Ausführung vorteilhaft erreicht, dass außer dem jeweiligen Aktuatorgehäuse keine weiteren Abstützbauteile, wie beispielsweise zusätzliche Träger, vorhanden sein müssen, um die genannten Drehmomente und Kräfte abzustützen. Vielmehr kann vorteilhaft sogar vorgesehen sein, dass das Aktuatorgehäuse selbst als tragendes Element einer Fahrzeugkarosserie, insbesondere als Träger oder als Quertraverse, ausgebildet ist. Eine solche Ausführung hat den ganz besonderen Vorteil, dass die übrigen Komponenten der Fahrzeugkarosserie weniger Tragfunktionen übernehmen müssen und somit material- und bauraumsparender ausgebildet sein können.

Um Verspannungen des Aktuatorgehäuses beim Befestigen zu vermeiden, kann vorteilhaft vorgesehen sein, dass das Aktuatorgehäuse mittels wenigstens eines Loslagers direkt oder indirekt an der Fahrzeugkarosserie gelagert wird. Insbesondere kann das Aktuatorgehäuse mittels eines Festlagers und zusätzlich an anderer Stelle mittels eines Loslagers an einer Fahrzeugkarosserie befestigt sein. Das Loslager ermöglicht vorzugsweise eine Verschiebbarkeit in Axialrichtung.

Insbesondere kann ganz allgemein vorteilhaft vorgesehen sein, dass das Aktuatorgehäuse dazu ausgebildet und bestimmt ist, beweglich an einer Fahrzeugkarosserie befestigt zu werden. Eine solche Ausführung kann dennoch dazu ausgebildet sein, Drehmomente, Axialkräfte und Radialkräfte abzustützen und in eine Fahrzeugkarosserie abzuleiten.

Bei einer besonders vorteilhaften Ausführung ist das Aktuatorgehäuse dazu ausgebildet und bestimmt, unter Zwischenschaltung eines Elements zur akustischen Entkopplung an einer Fahrzeugkarosserie befestigt zu werden. Hierbei kann es sich insbesondere um ein dauerelastisches Bauteil, beispielsweise aus Gummi, handeln, das einerseits an der Fahrzeugkarosserie und andererseits an dem Aktuatorgehäuse befestigt wird. Es ist alternativ oder zusätzlich auch möglich, andersartige Dämpfungselemente, wie beispielsweise Luftdämpfer oder hydraulische Dämpfer zwischen das Aktuatorgehäuse und die Fahrzeugkarosserie zu schalten.

Vorzugsweise sind die Aktuatoren unabhängig voneinander betreibbar und/oder ansteuerbar. Dies ermöglicht es, wie bereits erwähnt, die Aktuatoren bei Bedarf derart anzusteuern, dass sie gleichzeitig ein gleichgerichtetes Drehmoment auf die Torsionsstäbe ausüben, beispielsweise um die Karosserie an einer Fahrzeugachse anzuheben oder abzusenken. Dies ermöglicht es außerdem, die Aktuatoren bei Bedarf derart anzusteuern, dass sie gleichzeitig ein gegensinniges Drehmoment auf die Torsionsstäbe ausüben, beispielsweise um ein Neigen der Fahrzeugkarosserie zur Seite zu bewirken. Es ist vorteilhaft auch möglich, die Aktuatoren bei Bedarf derart anzusteuern, dass gleichzeitig sowohl ein Neigen, als auch ein Anheben oder Absenken der Fahrzeugkarosserie an einer Fahrzeugachse erfolgt.

Das aktive Fahrwerk kann eine Steuerungsvorrichtung beinhalten, die die Aktuatoren steuert. Insbesondere kann vorteilhaft vorgesehen sein, dass die Steuerungsvorrichtung dazu ausgebildet ist, Steuerungsvorgaben von Sensoren und/oder von einer übergeordneten Fahrzeugelektronik zu empfangen und die Aktuatoren unter Berücksichtigung der Steuerungsvorgaben zu steuern. Wie bereits erwähnt, kann die Steuerungsvorrichtung vorteilhaft beispielsweise in einem Aktuatorgehäuse oder in einem gemeinsamen Aktuatorgehäuse der beiden Aktuatoren angeordnet sein.

Bei einer besonders vorteilhaften Ausführung sind die beiden Aktuatoren zueinander spiegelsymmetrisch aufgebaut und/oder angeordnet. Eine solche Ausführung ermöglicht in besonders vorteilhafter Weise die Verwendung von Gleichteilen und insbesondere von zwei gleichen Aktuatoren.

Bei einer besonderen Ausführung ist eine Messvorrichtung vorhanden, die die Torsion des Verbindungstorsionsstabes misst. Aufgrund des ermittelten Messwertes kann rückgeschlossen werden, welchen Drehwinkel die Torsionsstäbe relativ zueinander gerade aufweisen und welche Drehmomente gerade auf die Torsionsstäbe wirken. Insbesondere kann unter Berücksichtigung weiterer Steuerparameter der Aktuatoren rückgeschlossen werden, welche über die Räder des Fahrzeugs eingetragenen, externe Kräfte und Drehmomente auf die Torsionsstäbe wirken. Insbesondere kann vorgesehen sein, dass die Steuerungsvorrichtung die gemessene Torsion des Verbindungstorsionsstabes, insbesondere neben anderen Parametern oder Steuerungsvorgaben, bei der Ansteuerung der beiden Aktuatoren berücksichtigt.

Wie bereits erwähnt, können die Aktuatoren derart angesteuert werden, dass diese die Torsionsstäbe mit gleichgerichteten Drehmomenten beaufschlagen. Hierdurch kann an beiden Radaufhängungen einer Fahrzeugachse gleichzeitig eine Kraft bewirkt werden, die die Aufbaufedern spannt oder alternativ eine Kraft, die die Aufbaufedern entspannt. Entsprechend kann hierdurch ein Anheben oder ein Absenken der Fahrzeugkarosserie bewirkt werden.

Insbesondere können die Aktuatoren derart angesteuert werden, dass diese in demselben Zeitfenster jeweils eine Drehung des Abtriebselements um denselben Winkel bewirken, oder der Art, dass diese in demselben Zeitfenster jeweils eine gleichsinnige Drehung der Abtriebselemente um unterschiedliche Winkel bewirken.

Wie bereits erwähnt, können die Aktuatoren auch derart angesteuert werden, dass diese die Torsionsstäbe mit gegensinnigen Drehmomenten beaufschlagen. Dies bietet sich insbesondere bei Kurvenfahrten an, um einem Neigen der Fahrzeugkarosserie entgegen zu wirken. Insbesondere hierbei kann vorteilhaft vorgesehen sein, dass die Aktuatoren derart angesteuert werden, dass diese den Verbindungstorsionsstab tordieren und so verspannen.

Es ist insbesondere auch möglich, die Aktuatoren derart anzusteuern, dass sich der mittels der Aktuatoren tordierte und verspannte Verbindungstorsionsstab zusammen mit den Angekoppelten Torsionsstäben insgesamt zusätzlich dreht. Dies beispielsweise um zusätzlich zu einem seitlichen Neigen ein beidseitiges Anheben oder Absenken der Fahrzeugkarosserie zu bewirken.

Wie bereits erwähnt, können die Aktuatoren zum Bewirken einer Nickstabilisierung angesteuert werden. Beispielsweise kann mittels der Aktuatoren bei einem Bremsvorgang auf die Räder einer Vorderachse relativ zu einer Karosserie jeweils eine in Richtung auf die Fahrbahn gerichtete Kraft ausgeübt werden, um ein Absenken den Fahrzeugbugs zu vermeiden. Gleichzeitig kann das Fahrzeugheck über eine entsprechend entgegengerichtete Ansteuerung des aktiven Fahrwerks einer Hinterachse bei einem Bremsvorgang abgesenkt werden. Bei einem Beschleunigungsvorgang kann vorteilhaft eine umgekehrte Ansteuerung der aktiven Fahrwerke von Vorder- und Hinterachse erfolgen.

Wie ebenfalls bereits erwähnt, können die Aktuatoren - alternativ oder zusätzlich - zum Bewirken einer Wankstabilisierung angesteuert werden.

Von besonderem Vorteil ist ein Fahrzeug, das wenigstens ein aktives Fahrwerk beinhaltet.

Insbesondere kann vorteilhaft vorgesehen sein, dass sowohl die Vorderachse eines Fahrzeugs, als auch die Hinterachse eines Fahrzeugs jeweils ein erfindungsgemäßes aktives Fahrwerk aufweist. Hierbei kann darüber hinaus vorteilhaft vorgesehen sein, dass die beiden aktiven Fahrwerke der Vorderachse und der Hinterachse aufeinander abgestimmt und/oder zueinander synchron angesteuert werden. Die Ansteuerung kann vorteilhaft, insbesondere fahrsituationsabhängig, erfolgen. Beispielsweise kann eine fahrsituationsabhängige Ansteuerung erfolgen, um das Fahrverhalten des Fahrzeugs bei Kurvenfahrten, beim Beschleunigen und/oder beim Bremsen zu verbessern.

Die Torsionsstäbe können vorteilhaft zusammen mit dem Verbindungstorsionsstab einen Stabilisator der jeweiligen Fahrzeugachse bilden.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel eines erfindungsgemäßen aktiven Fahrwerks,
- Fig. 2: ein zweites Ausführungsbeispiel eines erfindungsgemäßen aktiven Fahrwerks,
- Fig. 3: ein drittes Ausführungsbeispiel eines erfindungsgemäßen aktiven Fahrwerks,
- Fig. 4: ein viertes Ausführungsbeispiel eines erfindungsgemäßen aktiven Fahrwerks, und
- Fig. 5: ein Ausführungsbeispiel eines Fahrzeugs, das ein erfindungsgemäßes aktives Fahrwerk aufweist.

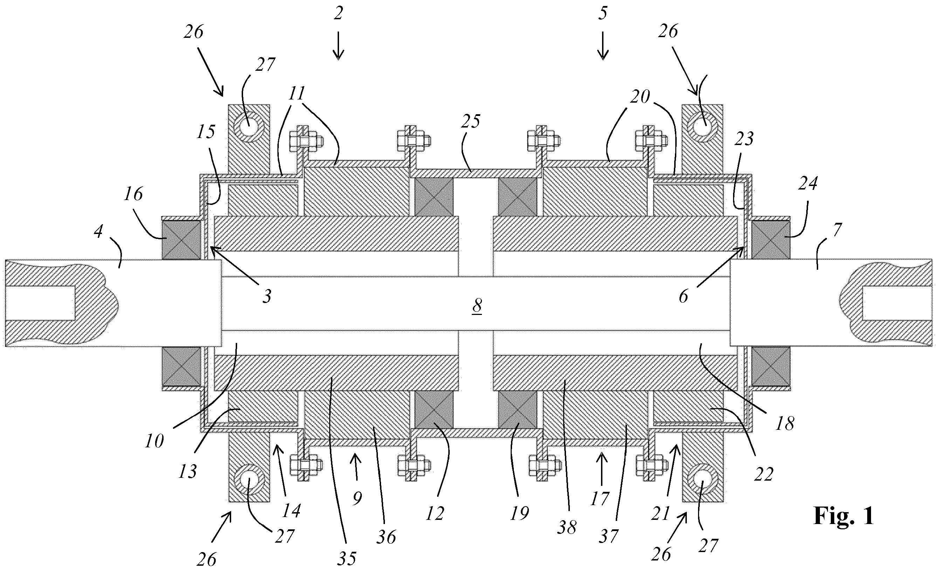

Fig. 1 zeigt ein erstes Ausführungsbeispiel eines erfindungsgemäßen aktiven Fahrwerks 1. Das aktive Fahrwerk 1 weist einen ersten Aktuator 2 auf, an dessen Abtrieb 3 ein linker Torsionsstab 4 drehfest angekoppelt ist. Der linke Torsionsstab 4 ist dazu ausgebildet, mit einer linken Radaufhängung einer Fahrzeugachse verkoppelt zu werden. Das aktive Fahrwerk 1 weist außerdem einen zweiten Aktuator 5 auf, an dessen Abtrieb 6 ein rechter Torsionsstab 7 drehfest angekoppelt ist. Der rechte Torsionsstab 7 ist dazu ausgebildet, mit einer rechten Radaufhängung einer Fahrzeugachse verkoppelt zu werden.

Die die Torsionsstäbe 4, 7 sind drehfest mit einem Verbindungstorsionsstab 8 verbunden.

Der erste Aktuator 2 und der zweite Aktuator 5 sind gleich aufgebaut, jedoch spiegelsymmetrisch zueinander angeordnet. Der erste Aktuator 2 beinhaltet einen ersten Antriebsmotor 9, der einen ersten Rotor 35 und einen ersten Stator 36 beinhaltet und der eine erste Hohlwelle 10 zur Rotation antreibt. Die Hohlwelle 10 ist relativ zu einem ersten Aktuatorgehäuse 11 mittels eines Wälzlagers 12 drehbar gelagert. Die erste Hohlwelle 10 ist außerdem drehfest mit dem Wellengenerator 13 eines ersten Spannungswellengetriebes 14 verbunden. Der Flextopf 15 des ersten Spannungswellengetriebes 14 fungiert als Abtrieb und ist drehfest mit dem linken Torsionsstab 4 verbunden. Der linke Torsionsstab 4 ist mittels eines weiteren Wälzlagers 16 relativ zu dem ersten Aktuatorgehäuse 11 drehbar gelagert.

Der zweite Aktuator 5 beinhaltet einen zweiten Antriebsmotor 17, der einen zweiten Rotor 37 und einen zweiten Stator 38 beinhaltet und der eine zweite Hohlwelle 18 zur Rotation antreibt. Die zweite Hohlwelle 18 ist mittels eins Wälzlagers 19 relativ zu einem zweiten Aktuatorgehäuse 20 drehbar gelagert. Der zweite Aktuator 5 beinhaltet ein zweites Spannungswellengetriebe 21, dessen Wellengenerator 22 über die zweite Hohlwelle 18 angetrieben wird. Der Flextopf 23 dient als Abtrieb 6 und ist drehfest mit dem rechten Torsionsstab 7 verbunden. Der rechte Torsionsstab 7 ist außerdem mittels eines weiteren Wälzlagers 24 relativ zu dem zweiten Aktuatorgehäuse 20 drehbar gelagert.

Das erste Aktuatorgehäuse 11 und das zweite Aktuatorgehäuse 20 bilden zusammen mit einem Zwischengehäuseteil 25 ein zusammengesetztes Aktuatorgehäuse des aktiven Fahrwerks, das beide Antriebsmotore 9, 17 und beide Getriebe 14, 21 einhaust.

Das zusammengesetzte Aktuatorgehäuse weist Befestigungsfahnen 26 auf, die Durchgangsbohrungen 27 für Befestigungsschrauben beinhalten. Das zusammengesetzte Aktuatorgehäuse kann unter Verwendung der Befestigungsfahnen 26 an einer Fahrzeugkarosserie befestigt werden.

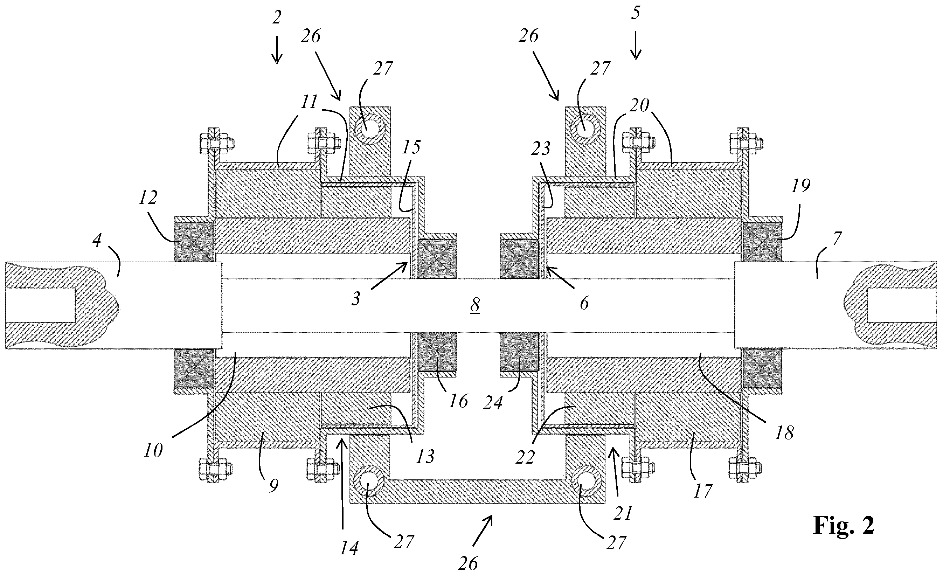

Fig. 2 zeigt ein zweites Ausführungsbeispiel eines erfindungsgemäßen aktiven Fahrwerks 1, das sich von dem in Figur 1 dargestellten Ausführungsbeispiel dadurch unterscheidet, dass die Aktuatoren 2, 5 statt eines gemeinsamen, zusammengesetzten Aktuatorgehäuses separate Aktuatorgehäuse 11, 20 aufweisen. Bei diesem Ausführungsbeispiel sind die Aktuatoren 2, 5 über eine der Befestigungsfahnen 26 drehfest miteinander verbunden.

Außerdem sind die Aktuatoren 2, 5 jeweils um 180 Grad gedreht angeordnet. Die Abtriebe 3, 6 sind bei diesem Ausführungsbeispiel drehfest mit dem Verbindungstorsionsstab 8 verbunden.

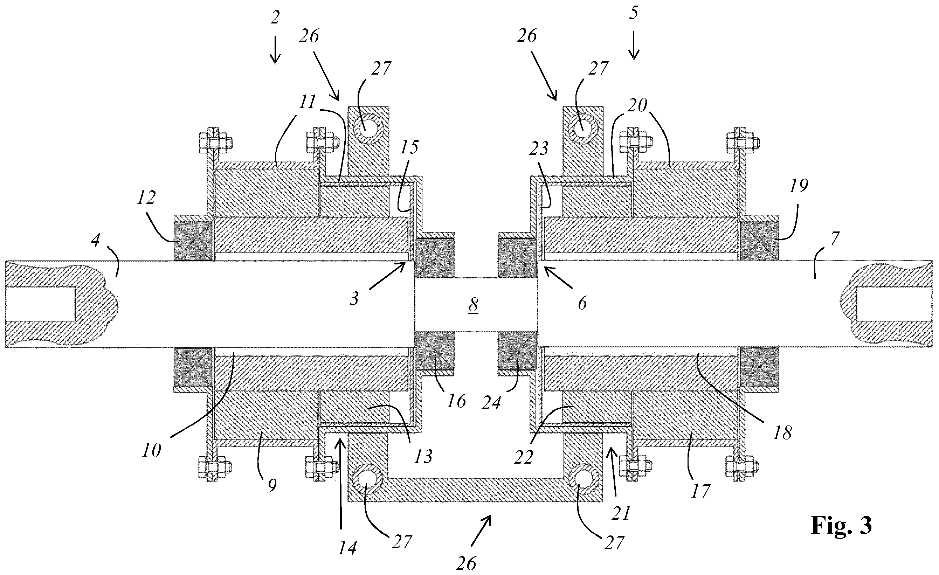

Fig. 3 zeigt ein drittes Ausführungsbeispiel eines erfindungsgemäßen aktiven Fahrwerks 1, das sich von dem in Figur 2 dargestellten Ausführungsbeispiel durch einen kürzeren Verbindungstorsionsstab 8 und dadurch unterscheidet, dass der Abtrieb 3 des ersten Aktuators 2 drehfest mit dem linken Torsionsstab 4 und der Abtrieb 6 des zweiten Aktuators 5 drehfest mit dem rechten Torsionsstab 7 verbunden ist.

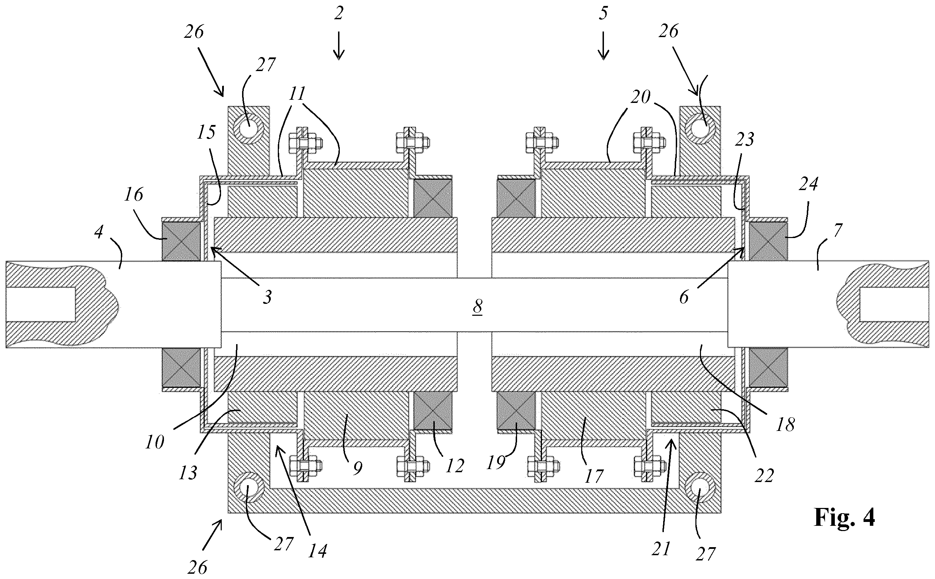

Fig. 4 zeigt ein viertes Ausführungsbeispiel eines erfindungsgemäßen aktiven Fahrwerks 1, das sich von dem in Figur 1 dargestellten Ausführungsbeispiel dadurch unterscheidet, dass die Aktuatoren 2, 5 statt eines gemeinsamen, zusammengesetzten Aktuatorgehäuses separate Aktuatorgehäuse 11, 20 aufweisen.

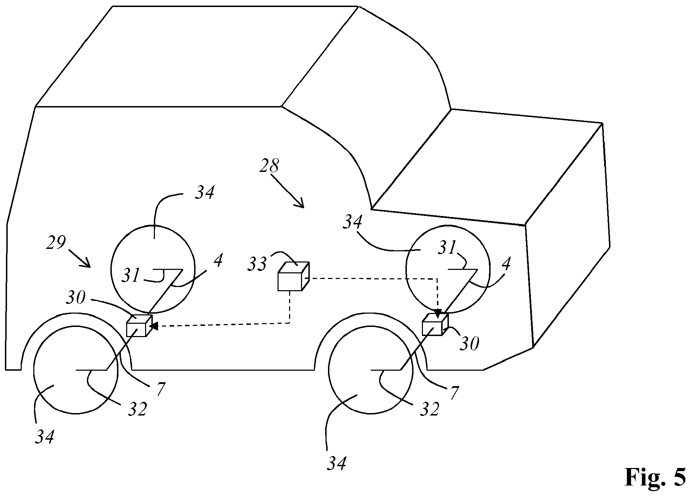

Fig. 5 zeigt ein Ausführungsbeispiel eines Fahrzeugs, das ein erfindungsgemäßes vorderes aktives Fahrwerk 28 und ein erfindungsgemäßes hinteres aktives Fahrwerk 29 aufweist.

Das vordere aktive Fahrwerk 28 weist ein gemeinsames Aktuatorgehäuse 30 auf und beinhaltet einen ersten Aktuator (in dieser Figur nicht eingezeichnet) und einen zweiten Aktuator (in dieser Figur nicht eingezeichnet).

An den Abtrieb des ersten Aktuators, ist ein linker Torsionsstab 4 angekoppelt. Am Ende des linken Torsionsstabs 4 ist ein Hebel 31 angeordnet. Der Hebel 31 ist an einen (in dieser Figur nicht dargestellten) Lenker der linken vorderen Radaufhängung angekoppelt. An den Abtrieb des zweiten Aktuators, ist ein rechter Torsionsstab 7 angekoppelt. Am Ende des rechten Torsionsstabs 4 ist ein Hebel 32 angeordnet. Der Hebel 32 ist an einen (in dieser Figur nicht dargestellten) Lenker der rechten vorderen Radaufhängung angekoppelt. Die die Torsionsstäbe 4, 7 sind drehfest mit einem Verbindungstorsionsstab 8 verbunden.

Das gemeinsame Aktuatorgehäuse 30 beinhaltet eine Steuerungsvorrichtung, die Steuerungsvorgaben von einer übergeordneten Fahrzeugelektronik 33 empfängt und die die Aktuatoren unter Berücksichtigung der Steuerungsvorgaben, insbesondere fahrsituationsabhängig, steuert.

Das hintere aktive Fahrwerk 29 ist genauso aufgebaut, wie das vordere aktive Fahrwerk 28. Auch das gemeinsame Aktuatorgehäuse 30 des hinteren aktiven Fahrwerks 29 beinhaltet eine Steuerungsvorrichtung, die Steuerungsvorgaben von der übergeordneten Fahrzeugelektronik 33 empfängt und die die Aktuatoren des hinteren aktiven Fahrwerks 29 unter Berücksichtigung der Steuerungsvorgaben steuert.

Die Radaufhängungen der Vorder- und der Hinterachse beinhalten eigene (nicht dargestellte) Federn, über die das Gewicht der Karosserie abgestützt ist.

Durch Rotieren der Torsionsstäbe 4, 7 mittels der Aktuatoren kann eine zusätzliche, sich an der Fahrzeugkarosserie abstützende Kraft auf das jeweilige Rad 34 ausgeübt werden und so der Höhenstand der Fahrzeugkarosserie relativ zu dem jeweiligen Rad 34 verändert werden.

### Bezugszeichenliste:

- 1: aktives Fahrwerk
- 2: erster Aktuator
- 3: Abtrieb des ersten Aktuators 2
- 4: linker Torsionsstab
- 5: zweiter Aktuator
- 6: Abtrieb des zweiten Aktuators 5
- 7: rechter Torsionsstab
- 8: Verbindungstorsionsstab
- 9: erster Antriebsmotor
- 10: erste Hohlwelle
- 11: erstes Aktuatorgehäuse
- 12: Wälzlager
- 13: Wellengenerator
- 14: erstes Spannungswellengetriebe
- 15: Flextopf des ersten Spannungswellengetriebes 14
- 16: weiteres Wälzlager
- 17: zweiter Antriebsmotor
- 18: zweite Hohlwelle
- 19: Wälzlager
- 20: zweites Aktuatorgehäuse
- 21: zweites Spannungswellengetriebe
- 22: Wellengenerator
- 23: Flextopf des zweiten Spannungswellengetriebes 21
- 24: weiteres Wälzlager
- 25: Zwischengehäuseteil
- 26: Befestigungsfahnen
- 27: Durchgangsbohrungen
- 28: vorderes aktives Fahrwerk
- 29: hinteres aktives Fahrwerk
- 30: gemeinsames Aktuatorgehäuse
- 31: Hebel
- 32: Hebel
- 33: übergeordnete Fahrzeugelektronik
- 34: Rad
- 35: Erster Rotor
- 36: Erster Stator
- 37: zweiter Rotor
- 38: zweiter Stator

## Patentansprüche

1. Aktives Fahrwerk (1) mit einem ersten Aktuator (2), an dessen Abtrieb (3) ein linker Torsionsstab (4) angekoppelt ist, der dazu ausgebildet ist, mit einer linken Radaufhängung einer Fahrzeugachse verkoppelt zu werden, und mit einem zweiten Aktuator (5), an dessen Abtrieb (6) ein rechter Torsionsstab (7) angekoppelt ist, der dazu ausgebildet ist, mit einer rechten Radaufhängung einer Fahrzeugachse verkoppelt zu werden, wobei die Abtriebe (3, 6) oder die Torsionsstäbe (4, 7) drehfest mit einem Verbindungstorsionsstab (8) verbunden sind, und/oder wobei die Abtriebe (3, 6) mechanisch parallel geschaltet sind, **dadurch gekennzeichnet, dass** der rechte und der linke Torsionsstab (4, 7) jeweils eine größere Torsionssteifigkeit aufweisen, als der Verbindungstorsionsstab (8).

2. Aktives Fahrwerk (1) nach Anspruch 1, **dadurch gekennzeichnet, dass** der rechte Torsionsstab, der linke Torsionsstab (4, 7) und der Verbindungstorsionsstab (8) unabhängig voneinander aus unterschiedlichen Rohmaterialstücken hergestellt sind.

3. Aktives Fahrwerk (1) nach Anspruch 1 oder 2, **dadurch gekennzeichnet, dass**
a. der erste Aktuator (2) einen ersten Antriebsmotor (9) aufweist, dem ein erstes Getriebe triebtechnisch nachgeschaltet ist und/oder dass
b. der zweite Aktuator (5) einen zweiten Antriebsmotor (17) aufweist, dem ein zweites Getriebe triebtechnisch nachgeschaltet ist, und/oder dass
c. der erste Aktuator (2) einen ersten Antriebsmotor (9) aufweist, dem ein erstes Getriebe triebtechnisch nachgeschaltet ist, wobei das erste Getriebe als erstes Spannungswellengetriebe (14) ausgebildet ist und/oder dass
d. der zweite Aktuator (5) einen zweiten Antriebsmotor (17) aufweist, dem ein zweites Getriebe triebtechnisch nachgeschaltet ist, wobei das zweite Getriebe als zweites Spannungswellengetriebe (21) ausgebildet ist, und/oder dass
e. der erste Aktuator (2) einen ersten Antriebsmotor (9) aufweist, dem ein erstes Getriebe triebtechnisch nachgeschaltet ist, wobei das erste Getriebe als erstes Spannungswellengetriebe (14) ausgebildet ist und wobei ein erster Flexspline des ersten Spannungswellengetriebes (14) den Abtrieb (3) des ersten Aktuators (2) bildet, und/oder dass
f. der zweite Aktuator (5) einen zweiten Antriebsmotor (17) aufweist, dem ein zweites Getriebe triebtechnisch nachgeschaltet ist, wobei das zweite Getriebe als zweites Spannungswellengetriebe (21) ausgebildet ist und wobei ein zweiter Flexspline des zweiten Spannungswellengetriebes (21) den Abtrieb (6) des zweiten Aktuators (5) bildet.

4. Aktives Fahrwerk (1) nach einem der Ansprüche 1 bis 3, **dadurch gekennzeichnet, dass**
a. der erste Aktuator (2) und der zweite Aktuator (5) ein gemeinsames Aktuatorgehäuse (30) aufweisen oder dass ein erstes Aktuatorgehäuse (11) des ersten Aktuators (2) und ein zweites Aktuatorgehäuse (20) des zweiten Aktuators (5) Bestandteile eines gemeinsamen, zusammengesetzten Aktuatorgehäuses sind, oder dass
b. der erste Aktuator (2) ein erstes Aktuatorgehäuse (11) aufweist und dass der zweite Aktuator (5) ein von dem ersten Aktuatorgehäuse (11) räumlich separates zweites Aktuatorgehäuse (20) aufweist.

5. Aktives Fahrwerk (1) nach Anspruch 4, **dadurch gekennzeichnet, dass**
a. ein erster Circularspline des ersten Spannungswellengetriebes (14) drehfest mit einem Aktuatorgehäuse verbunden ist, und/oder dass
b. ein zweiter Circularspline des zweiten Spannungswellengetriebes (21) drehfest mit einem Aktuatorgehäuse verbunden ist, und/oder dass
c. das erste Aktuatorgehäuse (11) und/oder das zweite Aktuatorgehäuse (20) und/oder das gemeinsame Aktuatorgehäuse (30) dazu ausgebildet und bestimmt ist, insbesondere beweglich und/oder unter Zwischenschaltung eines Elements zur akustischen Entkopplung, an einer Fahrzeugkarosserie befestigt zu werden, und/oder dass
d. das erste Aktuatorgehäuse (11) und/oder das zweite Aktuatorgehäuse (20) und/oder das gemeinsame Aktuatorgehäuse (30) dazu bestimmt und ausgebildet sind, das von dem jeweiligen Aktuator aufgebrachte Drehmoment an einer Fahrzeugkarosserie abzustützen.

6. Aktives Fahrwerk (1) nach einem der Ansprüche 1 bis 5, **dadurch gekennzeichnet, dass**
a. die Aktuatoren (2, 5) unabhängig voneinander betreibbar und/oder ansteuerbar sind, und/oder dass
b. eine Steuerungsvorrichtung vorhanden ist, die die Aktuatoren (2, 5) steuert, und/oder dass
c. eine Steuerungsvorrichtung vorhanden ist, die dazu ausgebildet ist, Steuerungsvorgaben von Sensoren und/oder von einer übergeordneten Fahrzeugeinheit zu empfangen und die die Aktuatoren (2, 5) unter Berücksichtigung der Steuerungsvorgaben zu steuern, und/oder dass
d. eine Steuerungsvorrichtung vorhanden ist, die die Aktuatoren (2, 5) steuert und die in einem Aktuatorgehäuse (11, 20) oder in einem gemeinsamen Aktuatorgehäuse (30) angeordnet ist.

7. Aktives Fahrwerk (1) nach einem der Ansprüche 1 bis 6, **dadurch gekennzeichnet, dass** die Aktuatoren (2, 5), insbesondere fahrsituationsabhängig, derart ansteuerbar sind, dass diese die Torsionsstäbe (4, 7) mit gleichgerichteten Drehmomenten beaufschlagen.

8. Aktives Fahrwerk (1) nach einem der Ansprüche 1 bis 7 **dadurch gekennzeichnet, dass**
a. die Aktuatoren (2, 5), insbesondere fahrsituationsabhängig, derart ansteuerbar sind, dass diese in demselben Zeitfenster jeweils eine Drehung des Abtriebselements um denselben Winkel bewirken, und/oder dass
b. die Aktuatoren (2, 5), insbesondere fahrsituationsabhängig, derart ansteuerbar sind, dass diese in demselben Zeitfenster jeweils eine gleichsinnige Drehung der Abtriebselemente um unterschiedliche Winkel bewirken, und/oder dass
c. Aktuatoren (2, 5), insbesondere fahrsituationsabhängig, derart ansteuerbar sind, dass diese die Torsionsstäbe mit gegensinnigen Drehmomenten beaufschlagen, und/oder dass
d. die Aktuatoren (2, 5), insbesondere fahrsituationsabhängig, derart ansteuerbar sind, dass diese den Verbindungstorsionsstab (8) tordieren und so verspannen, und/oder dass
e. die Aktuatoren (2, 5), insbesondere fahrsituationsabhängig, derart ansteuerbar sind, dass diese den Verbindungstorsionsstab (8) tordieren und so verspannen und den verspannten Verbindungstorsionsstab (8) zu drehen.

9. Aktives Fahrwerk (1) nach einem der Ansprüche 1 bis 8, **dadurch gekennzeichnet, dass** der erste Aktuator (2) und der zweite Aktuator (5) zueinander spiegelsymmetrisch aufgebaut und/oder angeordnet sind.

10. Aktives Fahrwerk (1) nach einem der Ansprüche 1 bis 9, **dadurch gekennzeichnet, dass**
a. eine Messvorrichtung vorhanden ist, die die Torsion des Verbindungstorsionsstabes (8) misst, oder dass
b. eine Messvorrichtung vorhanden ist, die die Torsion des Verbindungstorsionsstabes misst, wobei die Steuerungsvorrichtung eine gemessene Torsion des Verbindungstorsionsstabes (8) bei der Ansteuerung der beiden Aktuatoren (2, 5) berücksichtigt.

11. Aktives Fahrwerk (1) nach einem der Ansprüche 1 bis 10, **dadurch gekennzeichnet, dass**
a. die Steuerungsvorrichtung die Aktuatoren (2, 5) zum Bewirken einer Nickstabilisierung ansteuert, und/oder dass
b. die Steuerungsvorrichtung die Aktuatoren (2, 5) zum Bewirken einer Wankstabilisierung ansteuert.

12. Fahrzeug beinhaltend wenigstens ein aktives Fahrwerk (1) nach einem der Ansprüche 1 bis 11.

13. Verfahren zum Steuern eines aktiven Fahrwerks (1) nach einem der Ansprüche 1 bis 11, **dadurch gekennzeichnet, dass**
a. die Aktuatoren (2, 5), insbesondere fahrsituationsabhängig, derart angesteuert werden, dass diese die Torsionsstäbe (4, 7) mit gleichgerichteten Drehmomenten beaufschlagen, oder dass
b. die Aktuatoren (2, 5), insbesondere fahrsituationsabhängig, derart angesteuert werden, dass diese die Torsionsstäbe (4, 7) mit gleichgerichteten Drehmomenten beaufschlagen, wobei die Aktuatoren (2, 5) derart angesteuert werden, dass diese in demselben Zeitfenster jeweils eine Drehung des Abtriebselements (3, 6) um denselben Winkel bewirken, oder dass
c. die Aktuatoren (2, 5), insbesondere fahrsituationsabhängig, derart angesteuert werden, dass diese die Torsionsstäbe (4, 7) mit gleichgerichteten Drehmomenten beaufschlagen, wobei die Aktuatoren (2, 5) derart angesteuert werden, dass diese in demselben Zeitfenster jeweils eine gleichsinnige Drehung der Abtriebselemente (3, 6) um unterschiedliche Winkel bewirken.

14. Verfahren zum Steuern eines aktiven Fahrwerks (1) nach einem der Ansprüche 1 bis 11, **dadurch gekennzeichnet, dass** die Aktuatoren (2, 5), insbesondere fahrsituationsabhängig, derart angesteuert werden, dass diese die Torsionsstäbe (4, 7) mit gegensinnigen Drehmomenten beaufschlagen.

15. Verfahren nach Anspruch 13 oder 14, **dadurch gekennzeichnet, dass**
a. die Aktuatoren (2, 5) derart angesteuert werden, dass diese den Verbindungstorsionsstab (8) tordieren und so verspannen, oder dass
b. die Aktuatoren (2, 5) derart angesteuert werden, dass diese den Verbindungstorsionsstab (8) tordieren und so verspannen und sich der tordierte und verspannte Verbindungstorsionsstab (8) zusätzlich dreht.

## Claims

1. Active chassis (1) with a first actuator (2), to the output (3) of which there is coupled a left-hand torsion bar (4) which is configured to be coupled to a left-hand wheel suspension of a vehicle axle, and with a second actuator (5), to the output (6) of which there is coupled a right-hand torsion bar (7) which is configured to be coupled to a right-hand wheel suspension of a vehicle axle, wherein the outputs (3, 6) or the torsion bars (4, 7) are connected rotationally conjointly to a connecting torsion bar (8), and/or wherein the outputs (3, 6) are connected mechanically in parallel, **characterized in that** the right-hand and the left-hand torsion bar (4, 7) each have a greater torsional stiffness than the connecting torsion bar (8).

2. Active chassis (1) according to Claim 1, **characterized in that** the right-hand torsion bar, the left-hand torsion bar (4, 7) and the connecting torsion bar (8) are produced independently of one another from different raw material pieces.

3. Active chassis (1) according to Claim 1 or 2, **characterized in that**
a. the first actuator (2) has a first drive motor (9), downstream of which, in terms of drive, there is connected a first gear mechanism, and/or **in that**
b. the second actuator (5) has a second drive motor (17), downstream of which, in terms of drive, there is connected a second gear mechanism, and/or **in that**
c. the first actuator (2) has a first drive motor (9), downstream of which, in terms of drive, there is connected a first gear mechanism, wherein the first gear mechanism is configured as a strain wave gearing (14), and/or **in that**
d. the second actuator (5) has a second drive motor (17), downstream of which, in terms of drive, there is connected a second gear mechanism, wherein the second gear mechanism is configured as a second strain wave gearing (21), and/or **in that**
e. the first actuator (2) has a first drive motor (9), downstream of which, in terms of drive, there is connected a first gear mechanism, wherein the first gear mechanism is configured as a strain wave gearing (14) and wherein a first flex spline of the first strain wave gearing (14) forms the output (3) of the first actuator (2), and/or **in that**
f. the second actuator (5) has a second drive motor (17), downstream of which, in terms of drive, there is connected a second gear mechanism, wherein the second gear mechanism is configured as a second strain wave gearing (21) and wherein a second flex spline of the second strain wave gearing (21) forms the output (6) of the second actuator (5).

4. Active chassis (1) according to any one of Claims 1 to 3, **characterized in that**
a. the first actuator (2) and the second actuator (5) have a common actuator housing (30), or **in that** a first actuator housing (11) of the first actuator (2) and a second actuator housing (20) of the second actuator (5) are constituent parts of a common assembled actuator housing, or **in that**
b. the first actuator (2) has a first actuator housing (11), and **in that** the second actuator (5) has a second actuator housing (20) that is spatially separate from the first actuator housing (11).

5. Active chassis (1) according to Claim 4, **characterized in that**
a. a first circular spline of the first strain wave gearing (14) is connected rotationally fixedly to an actuator housing, and/or **in that**
b. a second circular spline of the second strain wave gearing (21) is connected rotationally fixedly to an actuator housing, and/or **in that**
c. the first actuator housing (11) and/or the second actuator housing (20) and/or the common actuator housing (30) is configured and intended to be fastened in particular movably, and/or with the interposition of an element for acoustic decoupling, to a vehicle body, and/or **in that**
d. the first actuator housing (11) and/or the second actuator housing (20) and/or the common actuator housing (30) are intended and configured to support torque, which is imparted by the respective actuator, on a vehicle body.

6. Active chassis (1) according to any one of Claims 1 to 5, **characterized in that**
a. the actuators (2, 5) are operable and/or controllable independently of one another, and/or **in that**
b. a control device is provided which controls the actuators (2, 5), and/or **in that**
c. a control device is provided which is configured to receive control specifications from sensors and/or from a superordinate vehicle unit and to control the actuators (2, 5) taking into consideration the control specifications, and/or **in that**
d. a control device is provided which controls the actuators (2, 5) and which is arranged in an actuator housing (11, 20) or in a common actuator housing (30).

7. Active chassis (1) according to any one of Claims 1 to 6, **characterized in that** the actuators (2, 5) are controllable, in particular in a manner dependent on the driving situation, so as to apply torques in the same direction to the torsion bars (4, 7).

8. Active chassis (1) according to any one of Claims 1 to 7, **characterized in that**
a. the actuators (2, 5) are controllable, in particular in a manner dependent on the driving situation, so as to each effect a rotation of the output element by the same angle in the same time window, and/or **in that**
b. the actuators (2, 5) are controllable, in particular in a manner dependent on the driving situation, so as to each effect a rotation of the output elements in the same direction by different angles in the same time window, and/or **in that**
c. actuators (2, 5) are controllable, in particular in a manner dependent on the driving situation, so as to apply torques in the same direction to the torsion bars, and/or **in that**
d. the actuators (2, 5) are controllable, in particular in a manner dependent on the driving situation, so as to twist and thus brace the connecting torsion bar (8), and/or in that
e. the actuators (2, 5) are controllable, in particular in a manner dependent on the driving situation, so as to twist and thus brace the connecting torsion bar (8) and rotate the braced connecting torsion bar (8).

9. Active chassis (1) according to any one of Claims 1 to 8, **characterized in that** the first actuator (2) and the second actuator (5) are of mirrorsymmetrical construction and/or arrangement with respect to one another.

10. Active chassis (1) according to any one of Claims 1 to 9, **characterized in that**
a. a measuring device is present that measures the torsion of the connecting torsion bar (8), or **in that**
b. a measuring device is provided that measures the torsion of the connecting torsion bar, wherein the control device takes a measured torsion of the connecting torsion bar (8) into consideration in the control of the two actuators (2, 5).

11. Active chassis (1) according to any one of Claims 1 to 10, **characterized in that**
a. the control device controls the actuators (2, 5) in order to effect pitch stabilization, and/or **in that**
b. the control device controls the actuators (2, 5) in order to effect roll stabilization.

12. Vehicle comprising at least one active chassis (1) according to any one of Claims 1 to 11.

13. Method for controlling an active chassis (1) according to any one of Claims 1 to 11, **characterized in that**
a. the actuators (2, 5) are controlled, in particular in a manner dependent on the driving situation, so as to apply torques in the same direction to the torsion bars (4, 7), or **in that**
b. the actuators (2, 5) are controlled, in particular in a manner dependent on the driving situation, so as to apply torques in the same direction to the torsion bars (4, 7), wherein the actuators (2, 5) are controlled so as to each effect a rotation of the output element (3, 6) by the same angle in the same time window, and/or **in that**
c. the actuators (2, 5) are controlled, in particular in a manner dependent on the driving situation, so as to apply torques in the same direction to the torsion bars (4, 7), wherein the actuators (2, 5) are controlled so as to each effect a rotation of the output elements (3, 6) in the same direction by different angles in the same time window.

14. Method for controlling an active chassis (1) according to any one of Claims 1 to 11, **characterized in that** the actuators (2, 5) are controlled, in particular in a manner dependent on the driving situation, so as to apply torques in opposite directions to the torsion bars (4, 7).

15. Method according to Claim 13 or 14, **characterized in that**
a. the actuators (2, 5) are controlled so as to twist and thus brace the connecting torsion bar (8), or **in that**
b. the actuators (2, 5) are controlled so as to twist and thus brace the connecting torsion bar (8) and additionally rotate the twisted and thus braced connecting torsion bar (8).

## Revendications

1. Châssis actif (1) comprenant un premier actionneur (2), à la sortie (3) duquel est couplée une barre de torsion gauche (4), qui est configurée pour être couplée à une suspension de roue gauche d'un essieu de véhicule, et comprenant un deuxième actionneur (5), à la sortie (6) duquel est couplée une barre de torsion droite (7), qui est configurée pour être couplée à une suspension de roue droite d'un essieu de véhicule, les sorties (3, 6) ou les barres de torsion (4, 7) étant reliées de manière immobile en rotation à une barre de torsion de liaison (8), et/ou les sorties (3, 6) étant montées mécaniquement en parallèle, **caractérisé en ce que** la barre de torsion droite et la barre de torsion gauche (4, 7) présentent chacune une plus grande rigidité en torsion que la barre de torsion de liaison (8) .

2. Châssis actif (1) selon la revendication 1, **caractérisé en ce que** la barre de torsion droite, la barre de torsion gauche (4, 7) et la barre de torsion de liaison (8) sont fabriquées indépendamment les unes des autres à partir de pièces de matériaux bruts différentes.

3. Châssis actif (1) selon la revendication 1 ou 2, **caractérisé en ce que**
a. le premier actionneur (2) présente un premier moteur d'entraînement (9), en aval duquel est monté en entraînement un premier engrenage et/ou **en ce que**
b. le deuxième actionneur (5) présente un deuxième moteur d'entraînement (17), en aval duquel est monté en entraînement un deuxième engrenage, et/ou **en ce que**
c. le premier actionneur (2) présente un premier moteur d'entraînement (9), en aval duquel est monté en entraînement un premier engrenage, le premier engrenage étant configuré sous la forme d'un premier engrenage à onde de déformation (14) et/ou **en ce que**
d. le deuxième actionneur (5) présente un deuxième moteur d'entraînement (17), en aval duquel est monté en entraînement un deuxième engrenage, le deuxième engrenage étant configuré sous la forme d'un deuxième engrenage à onde de déformation (21) et/ou **en ce que**
e. le premier actionneur (2) présente un premier moteur d'entraînement (9), en aval duquel est monté en entraînement un premier engrenage, le premier engrenage étant configuré sous la forme d'un premier engrenage à onde de déformation (14) et un premier Flexspline du premier engrenage à onde de déformation (14) formant la sortie (3) du premier actionneur (2) et/ou **en ce que**
f. le deuxième actionneur (5) présente un deuxième moteur d'entraînement (17), en aval duquel est monté en entraînement un deuxième engrenage, le deuxième engrenage étant configuré sous la forme d'un deuxième engrenage à onde de déformation (21) et un deuxième Flexspline du deuxième engrenage à onde de déformation (21) formant la sortie (6) du deuxième actionneur (5).

4. Châssis actif (1) selon l'une quelconque des revendications 1 à 3, **caractérisé en ce que**
a. le premier actionneur (2) et le deuxième actionneur (5) présentent un boîtier d'actionneur commun (30) ou **en ce qu'**un premier boîtier d'actionneur (11) du premier actionneur (2) et un deuxième boîtier d'actionneur (20) du deuxième actionneur (5) sont des constituants d'un boîtier d'actionneur commun assemblé, ou **en ce que**
b. le premier actionneur (2) présente un premier boîtier d'actionneur (11) et **en ce que** le deuxième actionneur (5) présente un deuxième boîtier d'actionneur (20) séparé dans l'espace du premier boîtier d'actionneur (11).

5. Châssis actif (1) selon la revendication 4, **caractérisé en ce que**
a. un premier Circular Spline du premier engrenage à onde de déformation (14) est relié de manière immobile en rotation à un boîtier d'actionneur, et/ou **en ce que**
b. un deuxième Circular Spline du deuxième engrenage à onde de déformation (21) est relié de manière immobile en rotation à un boîtier d'actionneur, et/ou en ce que
c. le premier boîtier d'actionneur (11) et/ou le deuxième boîtier d'actionneur (20) et/ou le boîtier d'actionneur commun (30) sont configurés pour et destinés à être fixés, en particulier de manière mobile et/ou avec interposition d'un élément pour le découplage acoustique, sur une carrosserie de véhicule, et/ou **en ce que**
d. le premier boîtier d'actionneur (11) et/ou le deuxième boîtier d'actionneur (20) et/ou le boîtier d'actionneur commun (30) sont destinés à et configurés pour soutenir le couple de rotation appliqué par l'actionneur respectif sur une carrosserie de véhicule.

6. Châssis actif (1) selon l'une quelconque des revendications 1 à 5, **caractérisé en ce que**
a. les actionneurs (2, 5) peuvent être actionnés et/ou commandés indépendamment l'un de l'autre, et/ou en ce que
b. un dispositif de commande est présent, qui commande les actionneurs (2, 5), et/ou **en ce que**
c. un dispositif de commande est présent, qui est configuré pour recevoir des instructions de commande de capteurs et/ou d'une unité de véhicule supérieure et qui commande les actionneurs (2, 5) en tenant compte des instructions de commande, et/ou **en ce que**
d. un dispositif de commande est présent, qui commande les actionneurs (2, 5) et qui est agencé dans un boîtier d'actionneur (11, 20) ou dans un boîtier d'actionneur commun (30).

7. Châssis actif (1) selon l'une quelconque des revendications 1 à 6, **caractérisé en ce que** les actionneurs (2, 5) peuvent être commandés, en particulier en fonction de la situation de conduite, de telle sorte que ceux-ci sollicitent les barres de torsion (4, 7) avec des couples de rotation de même orientation.

8. Châssis actif (1) selon l'une quelconque des revendications 1 à 7, **caractérisé en ce que**
a. les actionneurs (2, 5) peuvent être commandés, en particulier en fonction de la situation de conduite, de telle sorte que ceux-ci provoquent dans la même fenêtre temporelle une rotation de l'élément de sortie selon le même angle, et/ou **en ce que**
b. les actionneurs (2, 5) peuvent être commandés, en particulier en fonction de la situation de conduite, de telle sorte que ceux-ci provoquent dans la même fenêtre temporelle une rotation de même sens des éléments de sortie selon des angles différents, et/ou **en ce que**
c. les actionneurs (2, 5) peuvent être commandés, en particulier en fonction de la situation de conduite, de telle sorte que ceux-ci sollicitent les barres de torsion avec des couples de rotation de sens opposé, et/ou **en ce que**
d. les actionneurs (2, 5) peuvent être commandés, en particulier en fonction de la situation de conduite, de telle sorte que ceux-ci tordent et ainsi serrent la barre de torsion de liaison (8), et/ou **en ce que**
e. les actionneurs (2, 5) peuvent être commandés, en particulier en fonction de la situation de conduite, de telle sorte que ceux-ci tordent et ainsi serrent la barre de torsion de liaison (8) et font tourner la barre de torsion de liaison (8) serrée.

9. Châssis actif (1) selon l'une quelconque des revendications 1 à 8, **caractérisé en ce que** le premier actionneur (2) et le deuxième actionneur (5) sont construits et/ou agencés selon une symétrie de miroir l'un par rapport à l'autre.

10. Châssis actif (1) selon l'une quelconque des revendications 1 à 9, **caractérisé en ce que**
a. un dispositif de mesure est présent, qui mesure la torsion de la barre de torsion de liaison (8), ou **en ce que**
b. un dispositif de mesure est présent, qui mesure la torsion de la barre de torsion de liaison, le dispositif de commande tenant compte d'une torsion mesurée de la barre de torsion de liaison (8) lors de la commande des deux actionneurs (2, 5).

11. Châssis actif (1) selon l'une quelconque des revendications 1 à 10, **caractérisé en ce que**
a. le dispositif de commande commande les actionneurs (2, 5) pour effectuer une stabilisation en tangage, et/ou **en ce que**
b. le dispositif de commande commande les actionneurs (2, 5) pour effectuer une stabilisation en vacillement.

12. Véhicule comprenant au moins un châssis actif (1) selon l'une quelconque des revendications 1 à 11.

13. Procédé de commande d'un châssis actif (1) selon l'une quelconque des revendications 1 à 11, **caractérisé en ce que**
a. les actionneurs (2, 5) sont commandés, en particulier en fonction de la situation de conduite, de telle sorte que ceux-ci sollicitent les barres de torsion (4, 7) avec des couples de rotation de même sens, ou **en ce que**
b. les actionneurs (2, 5) sont commandés, en particulier en fonction de la situation de conduite, de telle sorte que ceux-ci sollicitent les barres de torsion (4, 7) avec des couples de rotation de même sens, les actionneurs (2, 5) étant commandés de telle sorte que ceux-ci provoquent dans la même fenêtre temporelle une rotation de l'élément de sortie (3, 6) selon le même angle, ou **en ce que**
c. les actionneurs (2, 5) sont commandés, en particulier en fonction de la situation de conduite, de telle sorte que ceux-ci sollicitent les barres de torsion (4, 7) avec des couples de rotation de même sens, les actionneurs (2, 5) étant commandés de telle sorte que ceux-ci provoquent dans la même fenêtre temporelle une rotation de même sens des éléments de sortie (3, 6) selon des angles différents.

14. Procédé de commande d'un châssis actif (1) selon l'une quelconque des revendications 1 à 11, **caractérisé en ce que** les actionneurs (2, 5) sont commandés, en particulier en fonction de la situation de conduite, de telle sorte que ceux-ci sollicitent les barres de torsion (4, 7) avec des couples de rotation de sens opposés.

15. Procédé selon la revendication 13 ou 14, **caractérisé en ce que**
a. les actionneurs (2, 5) sont commandés de telle sorte que ceux-ci tordent et serrent ainsi la barre de torsion de liaison (8), ou **en ce que**
b. les actionneurs (2, 5) sont commandés de telle sorte que ceux-ci tordent et serrent ainsi la barre de torsion de liaison (8) et la barre de torsion de liaison (8) tordue et serrée tourne en outre.
